# EUROPEAN PATENT APPLICATION

(11) **EP 4 614 954 A1**
(43) Date of publication of application: **10.09.2025**
(21) Application number: 23924949.3
(22) Date of filing: 19.10.2023
(51) Int. Cl.: H04M 1/02, G06F 1/16, H01H 13/20

(54) **ELECTRONIC DEVICE**

(30) Priority: 27.02.2023 CN 202320443313 U
(71) Applicant: Honor Device Co., Ltd., Shenzhen, Guangdong 518040 (CN)
(72) Inventor: YAN, Bin, Shenzhen, Guangdong 518040 (CN); TANG, Zhenrui, Shenzhen, Guangdong 518040 (CN)
(74) Representative: Goddar, Heinz J.
(86) International application number: PCT/CN2023/125408
(87) International publication number: WO 2024/178995

(57) **Abstract**

This application relates to the technical field of electronic devices, and provides an electronic device, to resolve a problem of how to prevent a button from scratching an outlet structure of a screen. Specifically, the electronic device includes a first border frame, a screen, and a button. The first border frame includes a first surface and a second surface opposite to each other and an outer side surface connected between the first surface and the second surface. The outer side surface is provided with a first mounting groove. The screen is located on a side of the first surface away from the second surface. The screen includes a body portion and a bent portion. The bent portion is bent from an edge of the body portion to a back side of the body portion. The button is mounted to the first mounting groove and is movable in a pressing direction relative to the first border frame. The button includes a third surface, a fourth surface, and a recessed portion. The third surface faces the screen, and the fourth surface faces away from the screen. The recessed portion is arranged on the third surface and is recessed from the third surface toward the fourth surface. The recessed portion and the bent portion are arranged opposite to each other in a height direction of the first border frame. The electronic device provided in this application is configured to display a video and an image.

## Description

This application claims priority to Chinese Patent Application No. 202320443313.9, filed with the China National Intellectual Property Administration on February 27, 2023 and entitled "ELECTRONIC DEVICE", which is incorporated herein by reference in its entirety.

### TECHNICAL FIELD

This application relates to the technical field of electronic devices, and in particular, to an electronic device.

### BACKGROUND

With the continuous improvement of people's living standards, electronic devices such as mobile phones and tablet computers are widely used. An electronic device usually includes a middle frame and a screen that are stacked. An outlet structure of the screen is usually bent from an edge of a body portion for displaying a video and an image to a back side of the body portion. Due to the machining tolerance, a height of the outlet structure protruding from a display surface of the body portion may be greater than a thickness of the body portion.

The electronic device is further usually provided with a button such as a power button or a volume button, to facilitate adjustment of on/off or a volume of the electronic device. In the related art, when the button and the outlet structure of the screen overlap in a thickness direction of the electronic device, if a thickness of the electronic device is limited, a through hole needs to be provided on a middle frame between the button and the outlet structure, to implement structural avoidance. In this way, during assembly of the electronic device, the button easily scratches the outlet structure of the screen.

### SUMMARY

Embodiments of this application provide an electronic device, to resolve a problem of how to prevent a button from scratching an outlet structure of a screen.

To achieve the foregoing objective, the following technical solutions are used in embodiments of this application.

Embodiments of this application provide an electronic device. The electronic device includes a first border frame, a screen, and a button. The first border frame includes a first surface and a second surface opposite to each other and an outer side surface connected between the first surface and the second surface. The outer side surface is provided with a first mounting groove. The screen is located on a side of the first surface away from the second surface. The screen includes a body portion and a bent portion. The bent portion is bent from an edge of the body portion to a back side of the body portion. The button is mounted to the first mounting groove and is movable in a pressing direction relative to the first border frame. The button includes a third surface, a fourth surface, and a recessed portion. The third surface faces the screen, and the fourth surface faces away from the screen. The recessed portion is arranged on the third surface and is recessed from the third surface toward the fourth surface. The recessed portion and the bent portion are arranged opposite to each other in a height direction of the first border frame.

According to the electronic device provided in embodiments of this application, the outer side surface of the first border frame is provided with the first mounting groove, and the button is mounted to the first mounting groove and is movable in the pressing direction relative to the first border frame, so that a user can perform a related operation on the electronic device by triggering the button. The bent portion of the screen is bent from the edge of the body portion to the back side of the body portion, so that a driving circuit of the screen can be electrically connected to a main circuit board of the electronic device from the back side of the body portion. The recessed portion is arranged on the third surface of the button facing the screen, the recessed portion is recessed from the third surface toward the fourth surface facing away from the screen, and the recessed portion and the bent portion of the screen are arranged opposite to each other in the height direction of the first border frame, so that a sufficient space can be reserved between the button and the bent portion of the screen in the height direction of the first border frame, thereby preventing damage to the screen caused by scratching the bent portion of the screen by the button during assembly of the electronic device.

In some possible implementations, the first border frame includes a blocking portion, and the blocking portion is located between the recessed portion and the bent portion. In this way, the blocking portion may separate the button from the bent portion of the screen, so as to further prevent the button from scratching the bent portion during assembly of the electronic device. In addition, damage to the screen as a result of dirt entering from an opening of the first mounting groove corroding the bent portion may be further prevented.

In some possible implementations, a thickness of the blocking portion is greater than or equal to 0.3 mm. In this way, strength of the blocking portion may be ensured, and it may be further ensured that the blocking portion can be formed during processing and manufacturing of the first border frame.

In some possible implementations, in the pressing direction, the recessed portion extends through a front end surface of the button. In this way, a sufficient space may be reserved between a front end portion of the button and the bent portion of the screen in the pressing direction, which may prevent the button from scratching the bent portion during the assembly of the electronic device, and is convenient for processing to form the recessed portion.

In some possible implementations, the button further includes a fifth surface and a sixth surface arranged opposite to each other in a length direction of the first border frame, and the recessed portion extends through the fifth surface and the sixth surface. In this way, the sufficient space may be further reserved between the front end portion of the button and the bent portion of the screen, which may prevent the button from scratching the bent portion during the assembly of the electronic device, and is more convenient for processing to form the recessed portion.

In some possible implementations, a bottom wall surface of the recessed portion is a plane. In this way, the recessed portion is conveniently formed on the button, so as to reduce the difficulty of designing and processing the button.

In some possible implementations, in the length direction of the first border frame, a bottom wall surface of the recessed portion includes a first region, a second region, and a third region successively connected. A distance between the second region and the fourth surface is greater than a distance between the first region and the fourth surface, and the distance between the second region and the fourth surface is further greater than a distance between the third region and the fourth surface. In this way, a local strength of the button may be increased, and then overall strength of the button may be ensured. In addition, a button portion between the second region and the fourth surface may be configured to be drive-connected to a switch member electrically connected to the main circuit board, so as to alleviate a problem of hand feeling caused by eccentricity of the front end portion of the button and improve user experience.

In some possible implementations, the electronic device further includes an elastic member and a first circuit board. The elastic member is arranged on the front end surface of the button portion between the second region and the fourth surface in the pressing direction. The first circuit board is located on a front side of the button in the pressing direction, and the first circuit board is fixed relative to the first border frame. A surface of the first circuit board facing the button is provided with a switch member, and the elastic member is located between the button and the switch member and is in contact with the switch member. In this way, the elastic member is arranged between the button and the switch member, which may prevent damage to the switch member during transmission of a pressing force applied by the user to the button assembly, and can also prevent damage to the switch member due to an external impact.

In some possible implementations, the blocking portion is provided with a first through hole. The first through hole is in communication with the first mounting groove and the first surface. The second region and the first through hole are arranged opposite to each other in the height direction of the first border frame. In this way, the blocking portion is partially provided with a through hole, so as to avoid the elastic member and the second region of the button as well as the bent portion of the screen, which is conducive to realizing lightness and thinness of the electronic device.

In some possible implementations, the electronic device further includes a first protective film. The first protective film is arranged at the first through hole and covers the first through hole. In this way, damage to the screen as a result of dirt entering from the opening of the first mounting groove corroding the bent portion through the first through hole may be prevented.

In some possible implementations, the button includes a button body portion and two mounting portions. The two mounting portions are arranged on a front end surface of the button body portion in the pressing direction. The two mounting portions are mounted to the first border frame. The two mounting portions are spaced apart in the length direction of the first border frame. A part of a surface of the button body portion forms a part of the bottom wall surface of the recessed portion, and a surface of each of the mounting portions facing the bent portion forms another part of the bottom wall surface of the recessed portion. In this way, the mounting portions may mount the button assembly to the first border frame, to prevent the button assembly from falling from the first border frame.

In some possible implementations, the button body portion includes a first portion, a second portion, and a third portion successively connected in the length direction of the first border frame. The two mounting portions include a first mounting portion and a second mounting portion. The first mounting portion is arranged on the first portion, and the second mounting portion is arranged on the third portion. The button further includes a first ridge and a second ridge. The first ridge is arranged on the first portion and arranged on the bottom wall surface of the recessed portion. The first ridge extends to the first mounting portion. The second ridge is arranged on the third portion and arranged on the bottom wall surface of the recessed portion, and the second ridge extends to the second mounting portion. In this way, the first ridge and the second ridge may ensure the strength of the button as measured at the first mounting portion and the second mounting portion, and then ensure the overall strength of the button, thereby ensuring reliability of the button assembly. In addition, a distance between the button and the blocking portion as measured at the first mounting portion and the second mounting portion may be further increased, which may prevent an increase in the assembly difficulty due to the button assembly swaying during assembly of the button assembly to the first border frame.

In some possible implementations, the blocking portion is provided with a second through hole and a third through hole. The second through hole and the third through hole are both in communication with the first mounting groove and the first surface. In the height direction of the first border frame, the first ridge is arranged opposite to the second through hole, and the second ridge is arranged opposite to the third through hole. In this way, the blocking portion is partially provided with a through hole, so as to avoid the first ridge, the second ridge, and the bent portion of the screen, which is conducive to realizing lightness and thinness of the electronic device.

In some possible implementations, the electronic device further includes a second protective film and a third protective film. The second protective film is arranged at the second through hole and covers the second through hole. The third protective film is arranged at the third through hole and covers the third through hole. In this way, damage to the screen as a result of dirt entering from the opening of the first mounting groove corroding the bent portion through the second through hole and the third through hole may be prevented.

In some possible implementations, in the height direction of the first border frame, a thickness of a button portion between the recessed portion and the fourth surface is greater than or equal to 0.4 mm. In this way, the overall strength of the button may be ensured in a case that the sufficient space is provided between the button and the bent portion of the screen, thereby ensuring the reliability of the button assembly.

In some possible implementations, in the height direction of the first border frame, a thickness of a button portion between the third surface and the fourth surface is greater than or equal to 1.2 mm. In this way, it may be ensured that an end surface of the button facing outside of the electronic device has a large enough area, thereby ensuring the hand feel when the user presses the button. In addition, when the button assembly is a fingerprint button, a chip of a fingerprint recognition module may be further reinforced, and a flexible circuit board of the fingerprint button is provided with a sufficient support force, to prevent the chip of the fingerprint recognition module from being damaged due to insufficient reinforcement of the button on the fingerprint recognition module.

In some possible implementations, the electronic device further includes a fingerprint recognition module and a first flexible circuit board. The fingerprint recognition module is arranged on a rear side of the button in the pressing direction. A part of the first flexible circuit board is arranged between the button and the fingerprint recognition module, and is electrically connected to the fingerprint recognition module. In this way, a fingerprint touching the fingerprint recognition module may be compared with a fingerprint saved in advance, to verify an identity of the user, thereby improving convenience and security of using the electronic device.

In some possible implementations, the screen includes a display panel and a first chip. The display panel is a flexible display panel. The display panel includes a display portion and a non-display portion. The display portion forms a part of the body portion. A part of the non-display portion forms the bent portion. An other part of the non-display portion forms a fixing portion. The fixing portion is fixed to the back side of the body portion. The bent portion is connected between the fixing portion and the display portion. The first chip is arranged on a side of the fixing portion facing away from the body portion. In this way, an area of a black border frame at the edge of the body portion may be reduced, thereby increasing a display area and implementing a full-screen display effect of the screen.

### BRIEF DESCRIPTION OF DRAWINGS

FIG. 1 is a three-dimensional view of an electronic device according to some embodiments of this application in an unfolded state;
FIG. 2 is a partial schematic structural exploded view of the electronic device shown in FIG. 1;
FIG. 3 is a schematic structural diagram of the electronic device shown in FIG. 1 in a folded state;
FIG. 4 is a schematic structural cross-sectional view of the electronic device shown in FIG. 1 taken along line A-A;
FIG. 5 is an enlarged view of the electronic device shown in FIG. 4 at B;
FIG. 6 is a schematic structural diagram of a back side of a screen of the electronic device shown in FIG. 4;
FIG. 7 is another schematic structural cross-sectional view of the electronic device shown in FIG. 1 taken along line A-A;
FIG. 8 is an enlarged view of the electronic device shown in FIG. 7 at E;
FIG. 9 is a schematic structural diagram of a button assembly of the electronic device shown in FIG. 7;
FIG. 10 is a schematic structural exploded view of the button assembly shown in FIG. 9;
FIG. 11 is a partial schematic structural cross-sectional view of the electronic device shown in FIG. 1 taken along line C-C;
FIG. 12 is a partial schematic structural cross-sectional view of a first border frame of the electronic device shown in FIG. 11;
FIG. 13 is still another schematic structural cross-sectional view of the electronic device shown in FIG. 1 taken along line A-A;
FIG. 14 is an enlarged view of the electronic device shown in FIG. 13 at D;
FIG. 15 is a schematic structural diagram of a button assembly of the electronic device shown in FIG. 13;
FIG. 16 is still another partial schematic structural view of the electronic device shown in FIG. 1 taken along line C-C;
FIG. 17 is a schematic structural diagram of a button assembly of the electronic device shown in FIG. 16; and
FIG. 18 is a partial schematic structural cross-sectional view of a first border frame of the electronic device shown in FIG. 17.

### REFERENCE NUMERALS:

100-Electronic device;
10-Screen; 10a-First display region; 10c-Third display region; 10b-Second display region; 101-Body portion; 102-Bent portion; 103-Fixing portion; 11-Back plate; 12-Display panel; 121-Display portion; 122-Non-display portion; 13-Light-transmitting cover plate; 14-First chip; 15-Second flexible circuit board;
20-Support apparatus; 21-First housing; 211-First middle frame; 2111-First border frame; 2111a-First surface; 2111a1-Avoidance hole; 2111b-Second surface; 2111c-Outer side surface; 2111d-First mounting groove; 2111d1-First opening; 2111d2-First bottom wall; 2111d3-First limiting portion; 2111d4-Second limiting portion; 2111e-Blocking portion; 2111f-First through hole; 2111g-Second through hole; 2111h-Third through hole; 2112-Second border frame; 2113-Third border frame; 2114-First middle plate; 212-First rear cover; 22-Second housing; 221-Second middle frame; 2211-Fourth border frame; 2212-Fifth border frame; 2213-Sixth border frame; 2214-Second middle plate; 222-Second rear cover; 23-Rotating shaft mechanism; 24-First protective film; 25-Second protective film; 26-Third protective film;
30-Button assembly; 31-Button; 311-Third surface; 312-Fourth surface; 313-Recessed portion; 3131-Bottom wall surface; 3132-Side wall surface; 3131a-First region; 3131b-Second region; 3131c-Third region; 314-Fifth surface; 315-Sixth surface; 316-Protrusion; 317-Button body portion; 318-Mounting portion; 3181-First mounting portion; 3181a-First connection segment; 3181b-Second connection segment; 3182-Second mounting portion; 3182a-Third connection segment; 3182b-Fourth connection segment; 319-First ridge; 320-Second ridge; 32-Fingerprint recognition module; 33-First flexible circuit board; 34-First circuit board; 341-Switch member; 35-Elastic member; 351-Groove.

### DESCRIPTION OF EMBODIMENTS

In embodiments of this application, it should be noted that, unless otherwise explicitly specified or defined, terms "mounting" and "connection" should be understood in a broad sense. For example, the "connection" may be a detachable connection, a non-detachable connection, a direct connection, or an indirect connection by using an intermediary.

In embodiments of this application, it should be understood that the mentioned orientation terms such as "up", "down", "left", "right", "inside", and "outside" are only directions with reference to the accompanying drawings. Therefore, the orientation terms used are intended to describe and understand embodiments of this application better and more clearly, and are not intended to indicate or imply that the indicated apparatus or element needs to have a specific orientation and be constructed and operated in the specific orientation. Therefore, such terms should not be construed as a limitation on embodiments of this application.

In embodiments of this application, terms "first", "second", "third", "fourth", "fifth", and "sixth" are merely for the purpose of description, and should not be construed as indicating or implying relative importance or implicitly indicating a quantity of indicated technical features. Therefore, features defined by "first", "second", "third", "fourth", "fifth", and "sixth" may explicitly or implicitly include one or more of the features.

In embodiments of this application, terms "comprise", "include", or any other variants thereof are intended to encompass non-exclusive inclusion, so that a process, a method, an article, or an apparatus including a series of elements not only includes those elements, but also includes another element not listed explicitly, or further includes intrinsic elements for the process, the method, the article, or the apparatus. Without any further limitation, an element defined by the phrase "including one ..." does not exclude existence of additional same elements in the process, the method, the article, or the apparatus that includes the element.

In embodiments of this application, "and/or" is merely an association relationship describing related objects, which means that three relationships may exist. For example, A and/or B may represent the following three cases. Only A exists, both A and B exist, and only B exists. In addition, the character "/" in this specification usually indicates an "or" relationship between a preceding associated object and a succeeding associated object.

In embodiments of this application, it should be noted that the description "vertical" and "parallel" respectively represent being substantially perpendicular and being substantially parallel allowed within a specific error range. The error range may be a range of less than or equal to 5°, 8°, or 10° respectively relative to an absolute vertical deviation angle and an absolute parallel deviation angle. This is not specifically limited herein.

This application provides an electronic device. The electronic device may be a user equipment (user equipment, UE), a terminal (terminal), or the like. For example, the electronic device may be a mobile terminal or a stationary terminal, such as a tablet computer (portable android device, PAD), a personal digital assistant (personal digital assistant, PDA), a handheld device having a wireless communication function, a computing device, an on-board device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in a smart city (smart city), or a wireless terminal in a smart home (smart home). A form of the electronic device is not specifically limited in embodiments of this application.

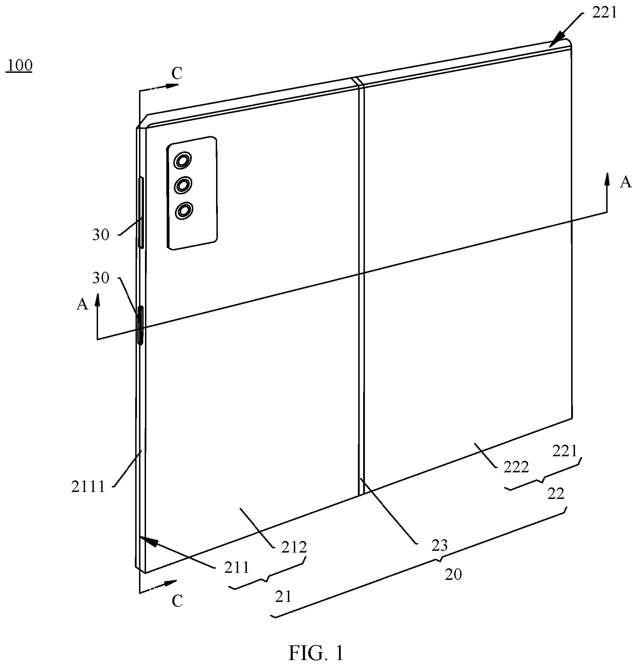

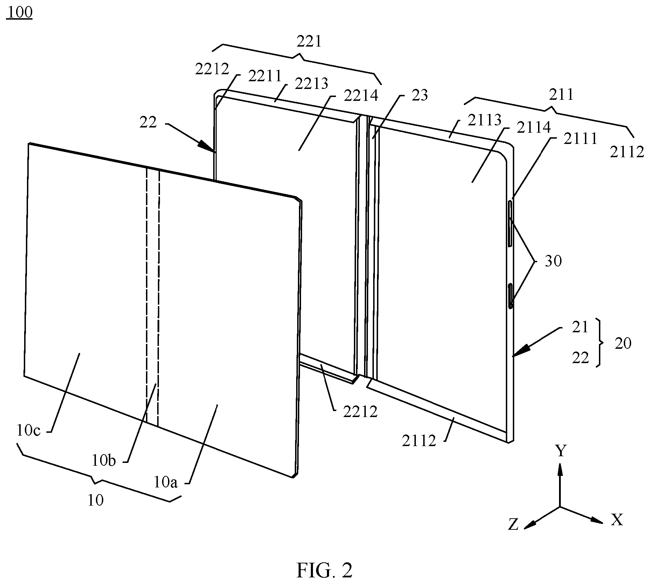

Refer to FIG. 1 and FIG. 2. FIG. 1 is a three-dimensional view of an electronic device 100 according to some embodiments of this application in an unfolded state. FIG. 2 is a partial schematic structural exploded view of the electronic device 100 shown in FIG. 1. This embodiment and embodiments in the following specification are described by using an example in which the electronic device 100 is a foldable handheld device. The foldable handheld device may be, for example, a mobile phone. The electronic device 100 is approximately in the shape of a rectangular flat plate in the unfolded state. To facilitate the description of the following embodiments, an XYZ coordinate system is established for the electronic device 100 in the unfolded state. A length direction of the electronic device 100 is defined as an X-axis direction, a width direction of the electronic device 100 is defined as a Y-axis direction, and a thickness direction of the electronic device 100 is defined as a Z-axis direction. It may be understood that the coordinate system of the electronic device 100 may be flexibly set according to an actual requirement. This is not specifically limited herein. In some other embodiments, the shape of the electronic device 100 in the unfolded state may also be a square flat plate, a circular flat plate, an elliptical flat plate, or the like. In still other embodiments, the electronic device 100 may also be an unfoldable handheld device. The unfoldable handheld device may be, for example, a mobile phone.

The electronic device 100 includes a screen 10, a support apparatus 20, and a button assembly 30.

It may be understood that FIG. 1 and FIG. 2 only schematically show some components included in the electronic device 100. Actual shapes, actual sizes, actual positions, and actual configurations of the components are not limited by FIG. 1 and FIG. 2.

The screen 10 is configured to display information such as an image and a video. Specifically, the screen 10 is a flexible screen that can be bent and deformed between a folded state and the unfolded state.

The support apparatus 20 is configured to carry the screen 10. The support apparatus 20 includes a first housing 21, a second housing 22, and a rotating shaft mechanism 23 connected between the first housing 21 and the second housing 22. The screen 10 is supported on the first housing 21, the second housing 22, and the rotating shaft mechanism 23. The rotating shaft mechanism 23 is configured to implement relative rotation between the second housing 22 and the first housing 21, to support the electronic device 100 to switch between the unfolded state and the folded state shown in FIG. 1.

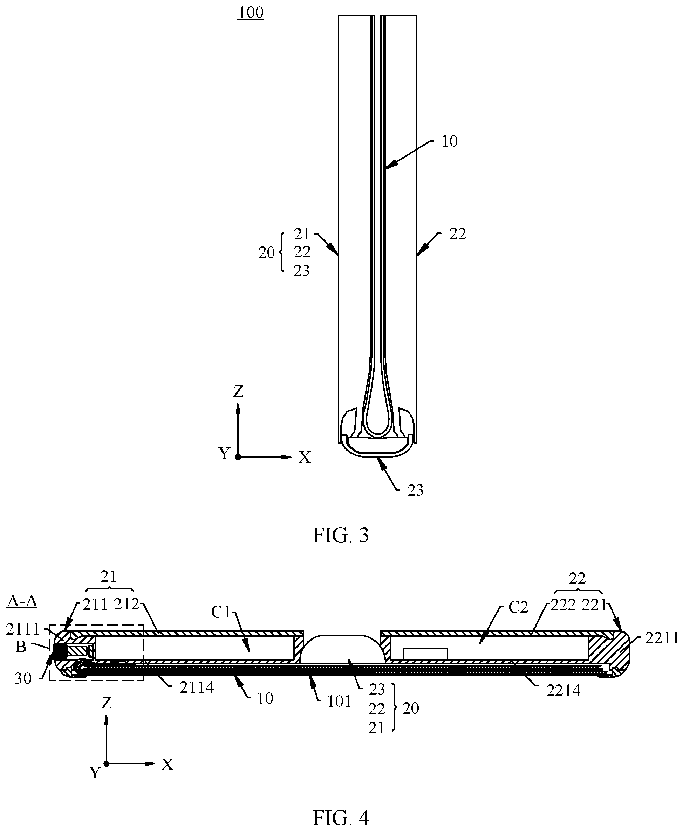

When the electronic device 100 is in the unfolded state shown in FIG. 1, large-screen display can be implemented, to provide a user with richer information and better user experience. When the electronic device 100 is in the folded state, referring to FIG. 3, FIG. 3 is a schematic structural diagram of the electronic device 100 shown in FIG. 1 in a folded state. The electronic device 100 is reduced in size and is convenient to carry.

It should be noted that the electronic device 100 shown in FIG. 3 is an inward-folding electronic device. In other words, when the electronic device 100 is in the folded state, the support apparatus 20 is protected outside the screen 10, and the screen 10 is invisible to a user, which may prevent the screen 10 from being scratched by a hard object. In some other embodiments, the electronic device 100 may also be an outward-folding electronic device. In other words, when the electronic device 100 is in the folded state, the screen 10 is located outside the support apparatus 20, and the screen 10 is visible to the user, so as to realize display of a video and an image in the folded state. The following embodiments are described based on the electronic device 100 being the inward-folding electronic device. This should not be considered as a specific limitation on the structural form of the electronic device 100.

Still referring to FIG. 1 and FIG. 2, the first housing 21 may include a first middle frame 211 and a first rear cover 212. The first middle frame 211 may include a first border frame 2111, a second border frame 2112, a third border frame 2113, and a first middle plate 2114. The first border frame 2111 is a short border frame of the electronic device 100. The second border frame 2112 and the third border frame 2113 are arranged opposite to each other and spaced apart in a length direction of the first border frame 2111. To be specific, the first border frame 2111 extends in the Y-axis direction, and the second border frame 2112 and the third border frame 2113 are spaced apart in the Y-axis direction and both extend in the X-axis direction. The second border frame 2112, the first border frame 2111, and the third border frame 2113 are successively connected, and are arranged around a peripheral edge of the first middle plate 2114. In embodiments shown in FIG. 1 and FIG. 2, the first border frame 2111, the second border frame 2112, and the third border frame 2113 are respectively a right border frame, a lower border frame, and a top border frame of the electronic device 100. In some other embodiments, the first border frame 2111 may also be the right border frame, the top border frame, or a bottom border frame of the electronic device 100.

The first border frame 2111, the second border frame 2112, and the third border frame 2113 may be metal members, or may be ceramic members. The first middle plate 2114 may be an aluminum plate, or may be an aluminum alloy plate, and may be further a magnesium alloy plate. The first border frame 2111, the second border frame 2112, and the third border frame 2113 may be integrally formed. In some examples, the first border frame 2111, the second border frame 2112, and the third border frame 2113 may be connected to the first middle plate 2114 through a snap fit, an adhesive, or the like. In some other examples, the first border frame 2111, the second border frame 2112, the third border frame 2113, and the first middle plate 2114 may also be formed as an integral structure. In other words, the first middle frame 211 is an integral structural member.

The second housing 22 may include a second middle frame 221 and a second rear cover 222. The second middle frame 221 may include a fourth border frame 2211, a fifth border frame 2212, a sixth border frame 2213, and a second middle plate 2214. The fourth border frame 2211 is a short border frame of the electronic device 100. The fifth border frame 2212 and the sixth border frame 2213 are arranged opposite to each other and spaced apart in a length direction of the fourth border frame 2211. To be specific, the fourth border frame 2211 extends in the Y-axis direction, and the fifth border frame 2212 and the sixth border frame 2213 are spaced apart in the Y-axis direction and extend in the X-axis direction. The fifth border frame 2212, the fourth border frame 2211, and the sixth border frame 2213 are successively connected, and are arranged around a peripheral edge of the second middle plate 2214. In embodiments shown in FIG. 1 and FIG. 2, the fourth border frame 2211, the fifth border frame 2212, and the sixth border frame 2213 are respectively a left border frame, another lower border frame, and another top border frame of the electronic device 100.

The fourth border frame 2211, the fifth border frame 2212, and the sixth border frame 2213 may be metal members, or may be ceramic members. The second middle plate 2214 may be an aluminum plate, or may be an aluminum alloy plate, and may be further a magnesium alloy plate. The fourth border frame 2211, the fifth border frame 2212, and the sixth border frame 2213 may be integrally formed. In some examples, the fourth border frame 2211, the fifth border frame 2212, and the sixth border frame 2213 may be connected to the second middle plate 2214 through a snap fit, an adhesive, or the like. In some other examples, the fourth border frame 2211, the fifth border frame 2212, the sixth border frame 2213, and the second middle plate 2214 may also be formed as an integral structure. In other words, the second middle frame 221 is an integral structural member. Based on this, the rotating shaft mechanism 23 is connected between the first middle frame 211 and the second middle frame 221.

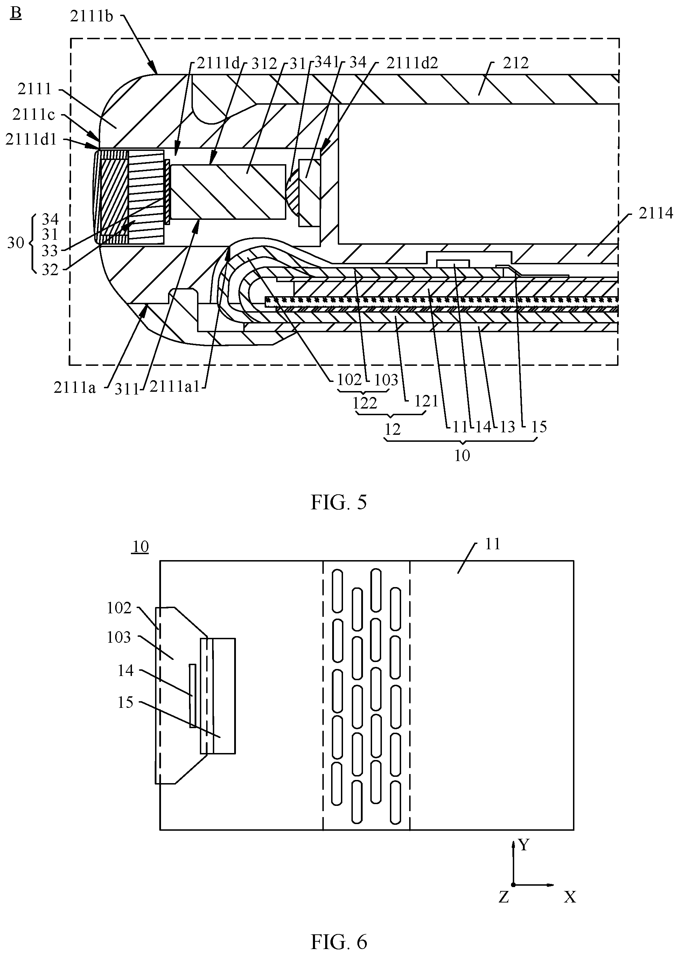

Refer to FIG. 4 and FIG. 5. FIG. 4 is a schematic structural cross-sectional view of the electronic device 100 shown in FIG. 1 taken along line A-A. FIG. 5 is an enlarged view of the electronic device 100 shown in FIG. 4 at B. The first border frame 2111 includes a first surface 2111a and a second surface 2111b opposite to each other and an outer side surface 2111c connected between the first surface 2111a and the second surface 2111b. The first surface 2111a and the second surface 2111b are arranged in a height direction of the first border frame 2111. The height direction of the first border frame 2111 is a thickness direction of the electronic device 100, and is also a direction perpendicular to a display interface of a screen 10. In other words, the first surface 2111a and the second surface 2111b are arranged in a Z-axis direction. The first surface 2111a and the second surface 2111b respectively form parts of two surfaces of the first middle frame 211 arranged in the height direction thereof. An outer side surface 2111c forms a part of an external surface of the electronic device 100.

The outer side surface 2111c is provided with a first mounting groove 2111d. The first mounting groove 2111d is provided with a first opening 2111d1 and a first bottom wall 2111d2. The first opening 2111d1 and the first bottom wall 2111d2 are arranged in an X-axis direction.

A first rear cover 212 is located on a side of the second surface 2111b of the first border frame 2111 away from the first surface 2111a, and is fixed to the first middle frame 211. In some examples, the first rear cover 212 may be fixed to the first middle frame 211 through an adhesive, a snap fit, or the like. In some other examples, the first rear cover 212 and the first middle frame 211 may also be formed as an integral structure. In other words, the first rear cover 212 and the first middle frame 211 form an integral structural member. A first accommodating space C1 is formed between the first rear cover 212 and the first middle frame 211.

A second rear cover 222 is located on a side of the second surface 2111b of the first border frame 2111 away from the first surface 2111a, and is fixed to the second middle frame 221. In some examples, the second rear cover 222 may be fixed to the second middle frame 221 through an adhesive, a snap fit, or the like. In some other examples, the second rear cover 222 and the second middle frame 221 may also be formed as an integral structure. In other words, the second rear cover 222 and the second middle frame 221 form an integral structural member. A second accommodating space C2 is formed between the second rear cover 222 and the second middle frame 221. The first accommodating space C1 and the second accommodating space C2 are configured to accommodate electronic components such as a main board, a sub-board, a speaker module, a camera module, and a battery.

The screen 10 is located on a side of the first surface 2111a of the first border frame 2111 away from the second surface 2111b. In other words, in the Z-axis direction, the screen 10 is located on a side of the first middle frame 211 away from the first rear cover 212, and located on a side of the second middle frame 221 away from the second rear cover 222. The screen 10 is provided with a display region for displaying image information. The display region is exposed to facilitate presentation of the image information to a user. The display region of the screen 10 includes a first display region 10a, a third display region 10c, and a second display region 10b. The first display region 10a is carried on the first middle frame 211 and fixed to the first middle plate 2114 through an adhesive, or the like. The second display region 10b is carried on the second middle frame 221 and fixed to the second middle plate 2214 through an adhesive, or the like. The third display region 10c is carried on the rotating shaft mechanism 23.

Still referring to FIG. 4 and FIG. 5, the screen 10 includes a back plate 11, a display panel 12, and a light-transmitting cover plate 13.

It should be noted that FIG. 4 and FIG. 5 schematically show some film layers included in the screen 10. Sizes and structures of these film layers are not limited by FIG. 4 and FIG. 5. These film layers of the screen 10 may include, but are not limited to, flexible adhesive tape layers, polarizers, buffer layers, shielding layers, and the like. This is not specifically limited in this application.

The display panel 12 is a main component for displaying an image and a video. The display panel 12 is a flexible display panel. Specifically, the display panel 12 may be an organic light-emitting diode (organic light-emitting diode, OLED) display panel, a micro organic light-emitting diode (micro organic light-emitting diode) display panel, or a quantum dot light emitting diode (quantum dot light emitting diode, QLED) display panel.

The display panel 12 includes a display portion 121 and a non-display portion 122. The display portion 121 is stacked between the back plate 11 and the light-transmitting cover plate 13. The back plate 11, the display portion 121, and the light-transmitting cover plate 13 form a body portion 101 of the screen. In other words, the display portion 121 forms a part of the body portion 101 of screen 10, and the display portion 121 is configured to display the image information. The non-display portion 122 is bent from an edge of the display portion 121 to a back side of the back plate 11. A part of the non-display portion 122 forms a bent portion 102, and an other part of the non-display portion 122 forms a fixing portion 103. The bent portion 102 is connected between the display portion 121 and the fixing portion 103. The fixing portion 103 is fixed to the back side of the back plate 11. In other words, the fixing portion 103 is fixed to a back side of the body portion 101, and the bent portion 102 is bent from the edge of the body portion 101 toward the back side of the body portion 101. It should be noted that the back side of the back plate 11 refers to a surface of the back plate 11 facing away from the display portion 121. The light-transmitting cover plate 13 is configured to protect the display panel 12 from water, dust, and scratches. A material of the light-transmitting cover plate 13 includes but is not limited to plastic. In some other embodiments, the screen 10 may alternatively not be provided with the light-transmitting cover plate 13.

In some examples, the back plate 11 is a rigid structural member. A material of the back plate 11 may be copper, copper alloy, steel, titanium, or titanium alloy. For example, the material of the back plate 11 may be titanium or titanium alloy. The back plate 11 has a relatively small thickness, so that the back plate 11 may be bent and deformed. Therefore, when the screen 10 is applied to the foldable electronic device 100, the back plate 11 and the screen 10 may be simultaneously folded or unfolded. The back plate 11 has high rigidity, so that when an external force is applied in a thickness direction of the back plate 11, the back plate 11 is less likely to recess and deform. In this way, the back plate 11 may provide good support for the display portion 121, thereby ensuring that the display portion 121 has good flatness and the display portion 121 is less likely to recess and deform when subjected to the external force.

Based on this, referring to FIG. 5 and FIG. 6, FIG. 6 is a schematic structural diagram of a back side of a screen 10 of the electronic device 100 shown in FIG. 4. The screen 10 further includes a first chip 14 and a second flexible circuit board 15. The first chip 14 is arranged on a back side of the body portion 101, so that an area of a black border frame at the edge of the body portion 101 may be reduced, thereby increasing a display area and implementing a full-screen display effect of the screen 10. Specifically, the first chip 14 is arranged on a side of the fixing portion 101 facing away from the body portion 103. The first chip 14 may be processed and manufactured by wafer slicing. A wafer refers to a silicon chip for making a silicon semiconductor circuit. The second flexible circuit board 15 is located on a side of the first chip 14 away from the bent portion 102. The second flexible circuit board 15 is connected to the fixing portion 103 and is electrically connected to the first chip 14. The second flexible circuit board 15 may be electrically connected to a main circuit board of the electronic device 100, to implement electrical signal interaction between the first chip 14 and the main circuit board, thereby driving the display panel 12 to display corresponding image information.

In some examples, a supporting metal plate may be connected between the fixing portion 103 and the body portion 101. For example, the supporting metal plate may be an aluminum alloy plate, and an elastic modulus of the aluminum alloy may be 70 GPa. When the user touches a display region of the body portion 101, the display region of the body portion 101 is recessed. The supporting metal plate may apply a reaction force to the display region of the body portion 101 to effectively buffer the external acting force, so that stress concentration is less likely to occur on the first chip 14, thereby preventing fracture and damage. In some other examples, the fixing portion 103 may also be fixed to the back side of the body portion 101.

In some other embodiments, the display panel 12 may also be a rigid display panel, and the bent portion 102 and the fixing portion 103 may also be flexible circuit boards. The bent portion 102 is connected to the back plate 11 and is electrically connected to the display panel 12. The bent portion 102 is bent from the edge of the back plate 11 toward the back side of the back plate 11. The bent portion 102 is connected between the back plate 11 and the fixing portion 103. The fixing portion 103 is fixed to the back side of the back plate 11, and the first chip 14 is fixed to a side surface of the fixing portion 103 facing away from the body portion 101.

The button assembly 30 is configured to input an instruction. The button assembly 30 is electrically connected to the main circuit board of the electronic device 100. The main circuit board of the electronic device 100 is configured to control an internal functional device of the electronic device 100 based on the instruction inputted by the button assembly 30. The button assembly 30 may be a volume button assembly. In this way, a magnitude of sound of the electronic device 100 may be adjusted by triggering the button assembly 30. Alternatively, the button assembly 30 may further be a power button assembly. In this way, an operation such as startup, shutdown, screen locking, or awakening may be performed on the electronic device 100 by triggering the button assembly 30.

The button assembly 30 may be arranged on a side edge and/or a top edge of the first middle frame 211 or the second middle frame 221 to serve as a side button or a top button. One or more button assemblies 30 may be arranged. In embodiments shown in FIG. 1 and FIG. 2, two button assemblies 30 are arranged. The two button assemblies 30 serve as side buttons and spaced apart in the Y-axis direction. In the two button assemblies 30, one button assembly 30 is a volume button assembly, and the other button assembly 30 is a power button assembly. In some other embodiments, the volume button assembly and the power button assembly may also serve as two top buttons and spaced apart in the X-axis direction. In still other embodiments, one of the volume button assembly and the power button assembly may also serve as a side button, and the other serves as a top button. This is not limited in this application.

Based on the above, referring to FIG. 4 and FIG. 5, the button assembly 30 includes a button 31, a fingerprint recognition module 32, a first flexible circuit board 33, and a first circuit board 34.

The button 31 is mounted to the first mounting groove 2111d of the first border frame 2111, and is movable in the pressing direction and a rebound direction relative to the first border frame 2111. It may be understood that the pressing direction of the button assembly 30 is a direction from the first opening 2111d1 of the first mounting groove 2111d to the first bottom wall 2111d2. The rebound direction of the button assembly 30 is a direction from the first bottom wall 2111d2 of the first mounting groove 2111d to the first opening 2111d1.

The first circuit board 34 is located on a front side of the button 31 in the pressing direction of the button 31. In other words, the first circuit board 34 is located on a side of the button 31 facing the first bottom wall 2111d2 of the first mounting groove 2111d. The first circuit board 34 and the first border frame 2111 are fixed relative to each other. In some examples, the first circuit board 34 may be fixed to the first bottom wall 2111d2 of the first mounting groove 2111d through an adhesive, a snap fit, or a threaded connection. In some other examples, the first circuit board 34 may also be fixed to the first accommodating space C1. The first circuit board 34 may be a rigid circuit board, a flexible circuit board, or a rigid-flex circuit board.

The first circuit board 34 is provided with a switch member 341 facing a surface of the button 31. The button 31 is drive-connected to the switch member 341. The switch member 341 is electrically connected to the main circuit board of the electronic device 100 through the first circuit board 34. It should be noted that the drive connection herein refers to a connection that can implement transmission of the pressing force applied by the user to the button 31 to the switch member 341 to cause an electrical connection relationship between the switch member 341 and the first circuit board 34 to change. In some examples, the button 31 may be in direct contact with the switch member 341. In some other examples, the button 31 may also contact the switch member 341 through an intermediate member such as a guide rod and/or an elastic member. In other words, the button 31 is in indirect contact with the switch member 341.

In some examples, the switch member 341 may be a dome sheet. When the user presses the button 31 to apply a pressing force to the button 31, the user needs to overcome an acting force of the dome sheet on the button 31, to force the dome sheet to deform and bring the dome sheet into contact with a trace on the first circuit board 34 to form a circuit for signal transmission. After the pressing force applied by the user to the button 31 is removed, the dome sheet recovers from deformation, and the button 31 moves toward a direction of the first opening 2211d1 of the first mounting groove 2111d to its original position under the action of a rebound force of the dome sheet. In other words, the button 31 moves to its original position in the rebound direction opposite to the pressing direction, and an electrical connection relationship between the dome sheet and the first circuit board 34 is cut off.

The fingerprint recognition module 32 is arranged on a rear side of the button 31 in the pressing direction. In other words, the fingerprint recognition module 32 is arranged on a side of the first bottom wall 2111d2 of the button 31 away from the first mounting groove 2111d. A fingerprint recognition surface of the fingerprint recognition module 32 faces outside of the first opening 2111d1, and the fingerprint recognition surface of the fingerprint recognition module 32 is also a pressing surface of the button assembly 30. Based on this, a part of the first flexible circuit board 33 is arranged between the fingerprint recognition module 32 and the button 31 and is electrically connected to the fingerprint recognition module 32. The first flexible circuit board 33 is further electrically connected to the main circuit board of the electronic device 100, so that the main circuit board controls the electronic device 100 to perform a related operation based on a fingerprint instruction from the fingerprint recognition module 32. In this way, a fingerprint touching the fingerprint recognition module 32 may be compared with a fingerprint saved in advance, to verify an identity of the user, thereby improving convenience and security of using the electronic device 100.

In some examples, the first flexible circuit board 33 and the fingerprint recognition module 32 may be fixedly connected and electrically connected through welding. In some other examples, the first flexible circuit board 33 and the fingerprint recognition module 32 may also be fixedly connected and electrically connected through a conductive adhesive. Based on this, the first flexible circuit board 33 and the button 31 may be fixedly connected through an adhesive, a snap fit, or the like. This is not limited in this application.

In some other embodiments, the button assembly 30 may alternatively not include the fingerprint recognition module 32 and the first flexible circuit board 33. In other words, the button assembly 30 is a mechanical pressing side button, and a surface of the button facing the outside of the first opening 2111d1 is the pressing surface of the button assembly 30.

In embodiments shown in FIG. 4 and FIG. 5, the button 31 includes a third surface 311 and a fourth surface 312 opposite to each other. The third surface 311 and the fourth surface 312 are arranged opposite to each other in a height direction of the first border frame 2111. In other words, the third surface 311 and the fourth surface 312 are arranged opposite to each other in a Z-axis direction. The third surface 311 faces the screen 10, and the fourth surface 312 faces away from the screen 10.

Specifically, the third surface 311 of the button 31 and the bent portion 102 of the screen 10 are arranged opposite to each other in the height direction of the first border frame 2111. In other words, an orthographic projection of the third surface 311 on a plane perpendicular to the Z-axis direction overlaps an orthographic projection of the bent portion 102 in the Z-axis direction. Due to a machining tolerance, a height of the bent portion 102 protruding from the display interface of the screen 10 may be greater than a thickness of the body portion 101. In this case, if the thickness of the electronic device 100 is limited, an avoidance hole 2111a1 needs to be provided on the first surface 2111a of the first border frame 2111. The avoidance hole 2111a1 extends through a side groove wall of the first mounting groove 2111d to implement structural avoidance, thereby realizing lightness and thinness of the electronic device 100. In this way, during assembly of the electronic device 100, a risk of the button 31 scratching the bent portion 102 of the screen 10 may exist.

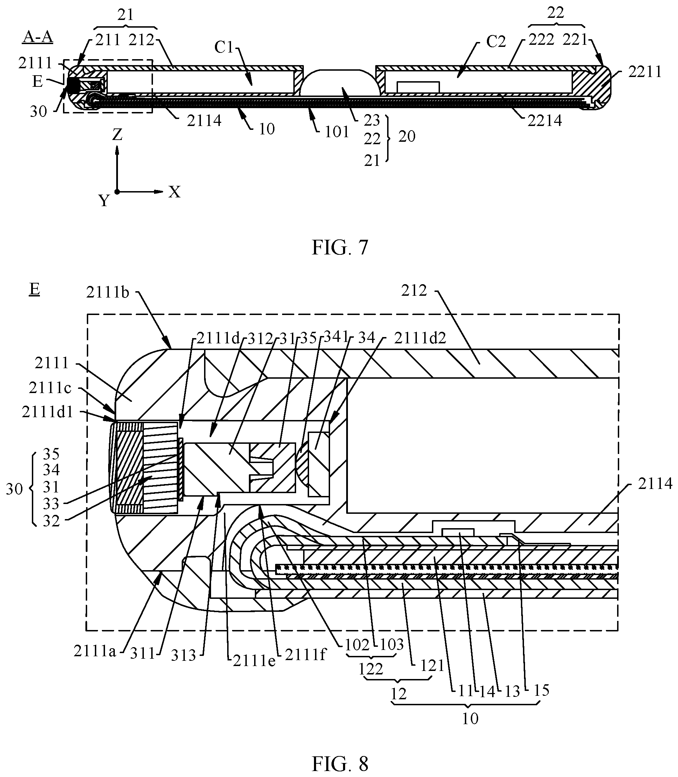

To solve the above problems, reference is made to FIG. 7 and FIG. 8. FIG. 7 is another schematic structural cross-sectional view of the electronic device 100 shown in FIG. 1 taken along line A-A. FIG. 8 is an enlarged view of the electronic device 100 shown in FIG. 7 at E. A difference between the embodiment shown in FIG. 7 and the embodiment shown in FIG. 4 is that the button 31 further includes a recessed portion 313. The recessed portion 313 is arranged on the third surface 311 and is recessed from the third surface 311 toward the fourth surface 312. The recessed portion 313 is arranged opposite to the bent portion 102 of the screen 10 in the height direction of the first border frame 2111. In this way, in the height direction of the first border frame 2111, a sufficient space may be reserved between the button 31 and the bent portion 102 of the screen 10, which may prevent damage to the screen 10 caused by scratching the bent portion 102 of the screen 10 by the button 31 during the assembly of the electronic device 100.

Based on this, the first border frame 2111 includes a blocking portion 2111e. The blocking portion 2111e is located between the recessed portion 313 and the bent portion 102. A part of a side wall surface of the first mounting groove 2111d is formed on a surface of the blocking portion 2111e facing away from the screen 10. A part of the first surface 2111a of the first border frame 2111 is formed on a surface of the blocking portion 2111e facing the screen 10. In this way, the blocking portion 2111e may separate the button 31 from the bent portion 102 of the screen 10, so as to further prevent the button 31 from scratching the bent portion 102 during the assembly of the electronic device 100. In addition, damage to the screen 10 as a result of dirt entering from a first opening 2111d1 of the first mounting groove 2111d corroding the bent portion 102 may be further prevented.

A thickness of the blocking portion 2111e is greater than or equal to 0.3 mm. In other words, a distance between each point on the blocking portion 2111e facing the surface of the screen 10 and each point on the blocking portion 2111e facing away from the surface of the screen 10 is greater than or equal to 0.3 mm. For example, the thickness of the blocking portion 2111e may be 0.3 mm, 0.35 mm, or 0.4 mm. In this way, the strength of the blocking portion 2111e may be ensured, and it may be further ensured that the blocking portion 2111e can be formed during processing and manufacturing of the first border frame 2111.

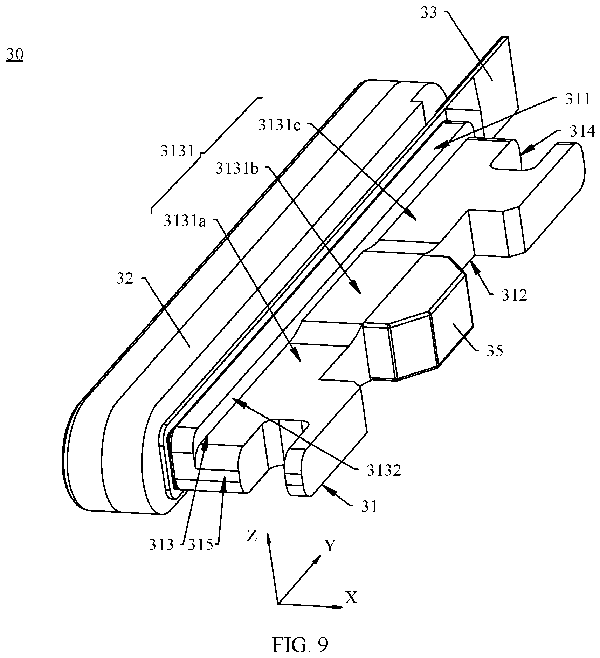

Based on the above, referring to FIG. 8 and FIG. 9, FIG. 9 is a schematic structural diagram of a button assembly 30 of the electronic device 100 shown in FIG. 7. The recessed portion 313 includes a bottom wall surface 3131 and a side wall surface 3132. The bottom wall surface 3131 faces the bent portion 102 of the screen 10, and the side wall surface 3132 is connected to the third surface 311 of the button 31. In the pressing direction, the recessed portion 313 extends through a front end surface of the button 31. In other words, the bottom wall surface 3131 of the recessed portion 313 is connected to the front end surface of the button 31. In this way, a sufficient space may be reserved between a front end portion of the button 31 and the bent portion 102 of the screen 10 in the pressing direction, which may prevent the button 31 from scratching the bent portion 102 during the assembly of the electronic device 100, and is convenient for processing to form the recessed portion 313.

Still referring to FIG. 9, the button 31 further includes a fifth surface 314 and a sixth surface 315 opposite to each other. The fifth surface 314 and the sixth surface 315 are arranged opposite to each other in the length direction of the first border frame 2111. In other words, the fifth surface 314 and the sixth surface 315 are arranged opposite to each other in a Y-axis direction. The fifth surface 314 is connected to both the third surface 311 and the fourth surface 312. The sixth surface 315 is connected to both the third surface 311 and the fourth surface 312. The recessed portion 313 further extends through the fifth surface 314 and the sixth surface 315. In other words, the bottom wall surface 3131 of the recessed portion 313 is further connected to both the fifth surface 314 and the sixth surface 315. In this way, the sufficient space may be further reserved between the front end portion of the button 31 and the bent portion 102 of the screen 10, which may prevent the button 31 from scratching the bent portion 102 during the assembly of the electronic device 100, and is more convenient for processing to form the recessed portion 313.

In some other embodiments, in the length direction of the first border frame 2111, a length of the bent portion 102 may be less than a length of the button 31. The recessed portion 313 may alternatively not extend through the fifth surface 314, the sixth surface 315, and the front end surface of the button 31. A recessed shape of the recessed portion 313 matches a shape of the bent portion 102 protruding toward the back side of the body portion 101. In yet other embodiments, the recessed portion 313 may also extend through only one of the fifth surface 314 and the sixth surface 315. In this case, a part of a projection of one of the fifth surface 314 and the sixth surface 315 connected to the bottom wall surface 3131 of the recessed portion 313 on the screen 10 in a Z-axis direction is located within the bent portion 102, and a projection of the other on the screen 10 in the Z-axis direction is located outside the bent portion 102.

Based on the above, still referring to FIG. 9, in the length direction of the first border frame 2111, the bottom wall surface 3131 of the recessed portion 313 includes a first region 3131a, a second region 3131b, and a third region 3131c successively connected. A distance between the second region 3131b and the fourth surface 312 is greater than a distance between the first region 3131a and the fourth surface 312. The distance between the second region 3131b and the fourth surface 312 is further greater than a distance between the third region 3131c and the fourth surface 312. It should be noted that the distance herein refers to a distance between a region on the bottom wall surface 3131 and a reference plane passing through at least one point on the fourth surface 312. The reference plane refers to a plane perpendicular to the height direction of the first border frame 2111 (a plane perpendicular to a Z axis). For example, the fourth surface 312 may be a plane, and the reference plane is a plane where the fourth surface 312 is located. The fourth surface 312 may also be an uneven surface. The reference surface passes through one or more points on the fourth surface 312.

In this way, a local strength of the button 31 may be increased, and then overall strength of the button 31 may be ensured. In addition, a button portion between the second region 3131b and the fourth surface 312 may be configured to be drive-connected to a switch member 341 on a first circuit board 34, so as to alleviate a problem of hand feeling caused by eccentricity of the front end portion of the button 31 and improve user experience.

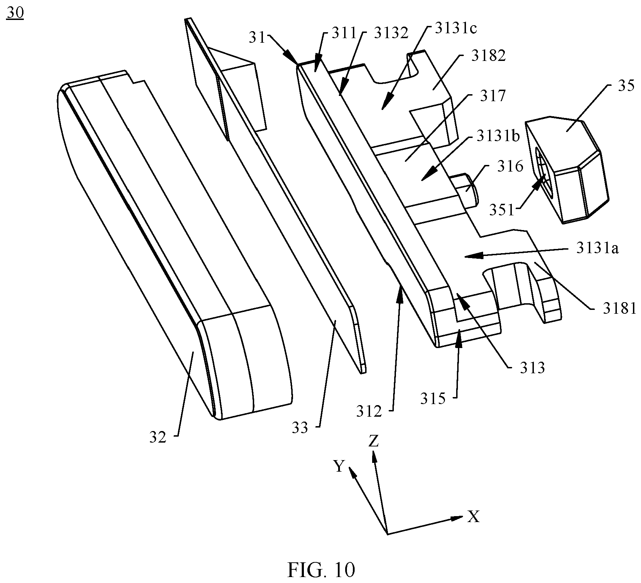

Based on the above, referring to FIG. 8 and FIG. 10, FIG. 10 is a schematic structural exploded view of the button assembly 30 shown in FIG. 9. The button assembly 30 further includes an elastic member 35. The elastic member 35 is arranged on a front end surface of the button portion between the second region 3131b and the fourth surface 312 in the pressing direction of the button 31. Specifically, a groove is provided on one of a front end surface of the button 31 and a rear end surface of the elastic member 35, and a protrusion matching the groove is provided on the other of the front end surface and the rear end surface. In embodiments shown in FIG. 8 and FIG. 10, a protrusion 316 is provided on the front end surface of the button portion between the second region 3131b and the fourth surface 312. A groove 351 is provided on the rear end surface of the elastic member 35. The groove 351 matches the protrusion 316. Based on this, the elastic member 35 is located between the button 31 and the switch member 341 on the first circuit board 34 and contacts the switch member 341. In this way, the elastic member 35 is arranged between the button 31 and the switch member 341, which may prevent damage to the switch member 341 during transmission of a pressing force applied by the user to the button assembly 30, and can also prevent damage to the switch member 341 due to an external impact.

The elastic member 35 may be a soft rubber member. Specifically, the elastic member 35 may be a thermoplastic polyurethane elastomer (Thermoplastic Tolyurethane elastomer, TPU) member. The elastic member 35 may also be a polyester rubber (TPEE) member. In some examples, the button 31 is a metal member. The elastic member 35 may be formed on the front end surface of the button 31 by injection molding. In some other examples, the button 31 is a plastic member. The elastic member 35 and the button 31 may be formed as an integral structure through a two-shot injection molding process. In this way, the elastic member 35 has good elasticity and high strength, so that the elastic member 35 has a relatively long service life. In addition, the elastic member 35 and the button 31 are connected by injection molding, so as to achieve a high connection strength between the elastic member and the button, which may avoid affecting the pressing feel of the user due to the elastic member 35 from being separated from the button 31, thereby ensuring reliability of the button assembly 30. In some other embodiments, the elastic member 35 may also be fixed to the front end surface of the button 31 through an adhesive, a snap fit, or the like. This is not limited in this application.

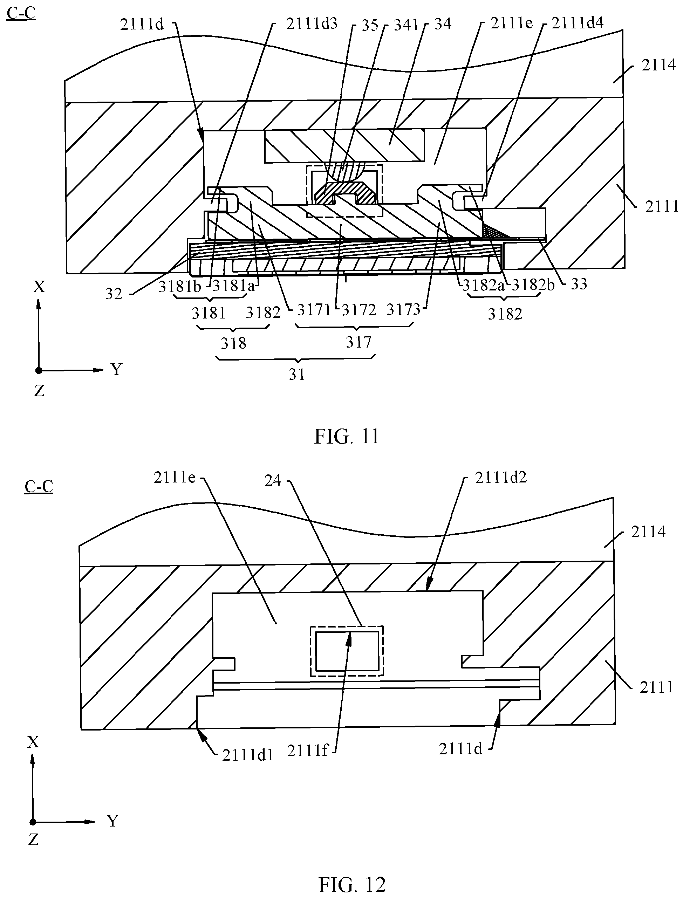

Based on the above, refer to FIG. 11 and FIG. 12. FIG. 11 is a partial schematic structural cross-sectional view of the electronic device 100 shown in FIG. 1 taken along line C-C. FIG. 12 is a partial schematic structural cross-sectional view of a first border frame 2111 of the electronic device 100 shown in FIG. 11. It should be noted that FIG. 11 and FIG. 8 are schematic structural diagrams of a same embodiment at different cross sections. The blocking portion 2111e is provided with a first through hole 2111f. The first through hole 2111f is in communication with the first mounting groove 2111d and the first surface 2111a. The second region 3131b and the elastic member 35 are arranged corresponding to the first through hole 2111f in the height direction of the first border frame 2111. In this way, the blocking portion 2111e is partially provided with a through hole, so as to avoid the elastic member 35 and the second region 3131b of the button 31 as well as the bent portion 102 of the screen 10, which is conducive to realizing lightness and thinness of the electronic device 100.

Based on this, still referring to FIG. 11 and FIG. 12, a support apparatus 20 further includes a first protective film 24. The first protective film 24 is arranged at the first through hole 2111f and covers the first through hole 2111f. Specifically, the first protective film 24 may be bonded to a surface of the blocking portion 2111e facing the screen 10. The first protective film 24 may be a polyimide (Polyimide, PI) film, or may be a polyethylene glycol terephthalate (polyethylene glycol terephthalate, PET) film. In this way, damage to the screen 10 as a result of dirt entering from the first opening 2111d1 of the first mounting groove 2111d corroding the bent portion 102 through the first through hole 2111f may be prevented.

Still referring to FIG. 10 and FIG. 11, the button 31 includes a button body portion 317 and two mounting portions 318. The button body portion 317 includes a first portion 3171, a second portion 3172, and a third portion 3173 successively connected in the length direction of the first border frame 2111. In other words, the first portion 3171, the second portion 3172, and the third portion 3173 are arranged in a Y-axis direction. The foregoing elastic member 35 is arranged on a front end surface of the second portion 3172 in the pressing direction of the button 31.

The two mounting portions 318 include a first mounting portion 3181 and a second mounting portion 3182. In the pressing direction of the button 31, the two mounting portions 318 are arranged on a front end surface of the button body portion 317. The first mounting portion 3181 is arranged on a front end surface of the first portion 3171 of the button body portion 317. The second mounting portion 3182 is arranged on a front end surface of the third portion 3173 of the button body portion 317. In other words, the two mounting portions 318 are spaced apart in the length direction of the first border frame 2111. In some examples, the first mounting portion 3181, the second mounting portion 3182, and the button body portion 317 may be formed as an integral structure. In some other examples, the first mounting portion 3181 and the second mounting portion 3182 may also be fixed to the button body portion 317 through a snap fit, an adhesive, a threaded connection, or the like. This is not limited in this application.

In embodiments shown in FIG. 10 and FIG. 11, the first mounting portion 3181 is approximately L-shaped. The first mounting portion 3181 includes a first connection segment 3181a and a second connection segment 3181b. An end of the first connection segment 3181a is connected to the front end surface of the first portion 3171 of the button body portion 317, and an other end extends toward a direction away from the button body portion 317 in the pressing direction of the button 31. An end of the second connection segment 3181b is connected to an end of the first connection segment 3181a away from the button body portion 317, and an other end extends toward a direction away from the second mounting portion 3182. The second mounting portion 3182 is approximately L-shaped. The second mounting portion 3182 includes a third connection segment 3182a and a fourth connection segment 3182b. An end of the third connection segment 3182a is connected to the front end surface of the third portion 3173 of the button body portion 317, and an other end of the third connection segment 3182a extends toward the direction away from the button body portion 317 in the pressing direction of the button 31. An end of the fourth connection segment 3182b is connected to an end of the third connection segment 3182a away from the button body portion 317, and an other end extends toward a direction away from the first mounting portion 3181.

The first mounting portion 3181 and the second mounting portion 3182 are mounted to the first border frame 2111. Specifically, a first limiting portion 2111d3 is arranged on a side groove wall of the first mounting groove 2111d arranged in the length direction of the first border frame 2111, and a second limiting portion 2111d4 is arranged on an other side groove wall. An end of the first limiting portion 2111d3 is fixed to the foregoing side groove wall of the first mounting groove 2111d, and an other end extends toward a direction close to the second limiting portion 2111d4. An end of the second limiting portion 2111d4 is fixed to the foregoing another side groove wall of the first mounting groove 2111d, and an other end extends toward a direction close to the first limiting portion 2111d3. In other words, the first limiting portion 2111d3 and the second limiting portion 2111d4 extended toward each other in the Y-axis direction. Based on this, the first mounting portion 3181 is mounted to the first limiting portion 2111d3, and the second mounting portion 3182 is mounted to the second limiting portion 2111d4.

Based on this, a front end portion of the button body portion 317 forms a part of the bottom wall surface 3131 of the recessed portion 313 toward a partial surface of the bent portion 102, and the mounting portion 318 forms an other part of the bottom wall surface 3131 of the recessed portion 313 toward the surface of the bent portion 102. In other words, a part of the recessed portion 313 is arranged on the button body portion 317, and an other part is arranged on the mounting portion 318. Specifically, a first region 3131a of the bottom wall surface 3131 of the recessed portion 313 is located on the first portion 3171 and the first mounting portion 3181. A second region 3131b of the bottom wall surface 3131 of the recessed portion 313 is located on the second portion 3172. A third region 3131c of the recessed portion 313 is located on the third portion 3173 and the second mounting portion 3182. In this way, the mounting portion 318 may mount the button assembly 30 to the first border frame 2111 to prevent the button assembly 30 from falling from the first border frame 2111. In addition, in the height direction of the first border frame 2111, a sufficient space is further reserved between the button 31 and the bent portion 102 to prevent the button 31 from scratching the bent portion 102 during assembly of the electronic device 100.

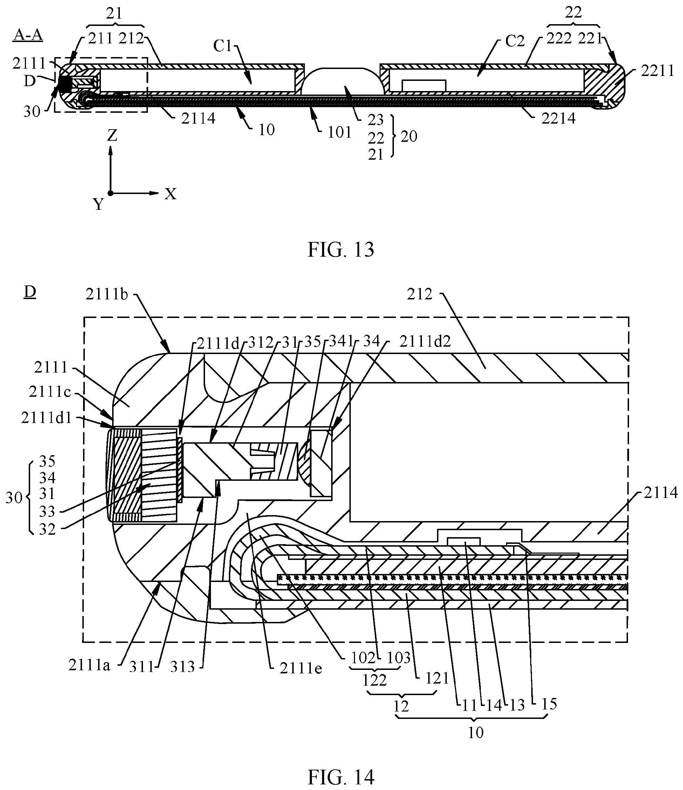

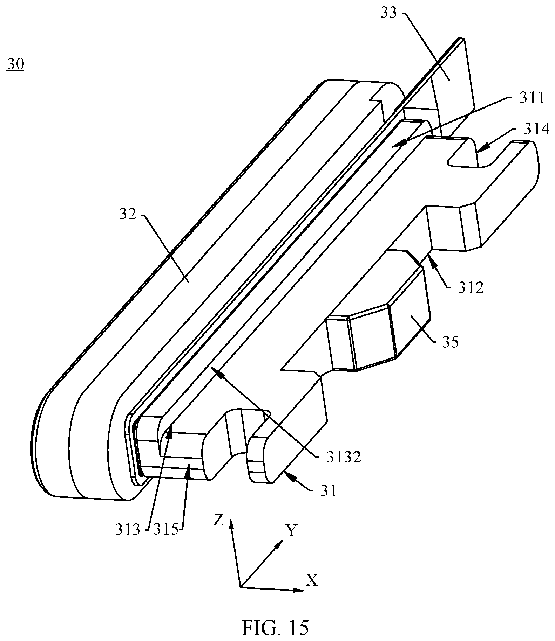

Refer to FIG. 13 to FIG. 15. FIG. 13 is still another schematic structural cross-sectional view of the electronic device 100 shown in FIG. 1 taken along line A-A. FIG. 14 is an enlarged view of the electronic device 100 shown in FIG. 13 at D. FIG. 15 is a schematic structural diagram of a button assembly 30 of the electronic device 100 shown in FIG. 13. A difference between embodiments shown in FIG. 13 to FIG. 15 and embodiments shown in FIG. 8 and FIG. 9 is that the bottom wall surface 3131 of the recessed portion 313 is a plane. In this case, the blocking portion 2111e completely separates the button 31 from the bent portion 102 of the screen 10. In this way, the recessed portion 313 is conveniently formed on the button 31, so as to reduce the difficulty of designing and processing the button 31.

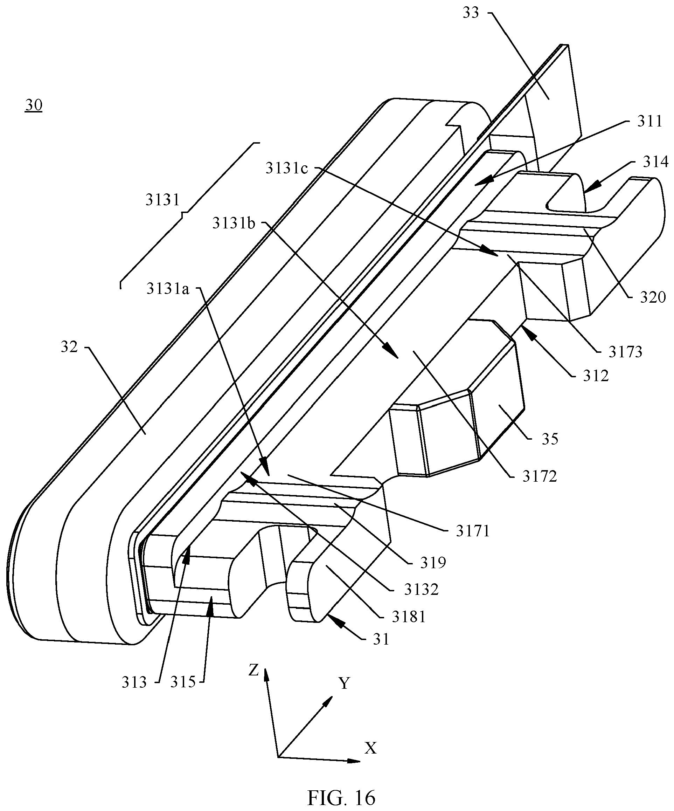

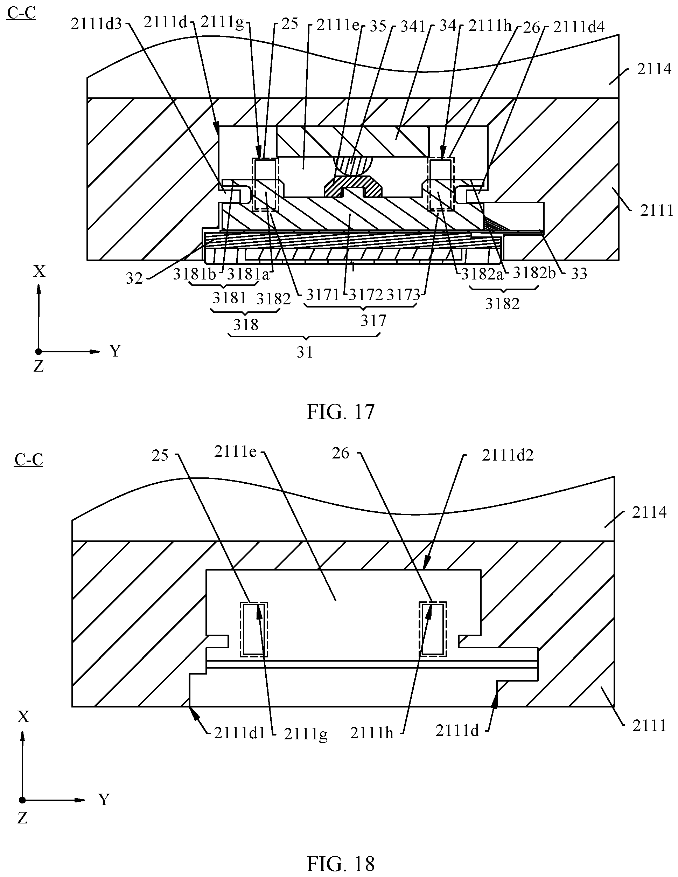

Refer to FIG. 16 and FIG. 17. FIG. 16 is still another partial schematic structural view of the electronic device shown 100 in FIG. 1 taken along line C-C. FIG. 17 is a schematic structural diagram of a button assembly 30 of the electronic device 100 shown in FIG. 16. A difference between embodiments shown in FIG. 16 and FIG. 17 and embodiments shown in FIG. 8 and FIG. 9 is that the button 31 further includes a first ridge 319 and a second ridge 320. The first ridge 319 is arranged on the first portion 3171 of the button body portion 317 and is located on the bottom wall surface 3131 of the recessed portion 313. The first ridge 319 extends to the first mounting portion 3181. The second ridge 320 is arranged on the third portion 3173 of the button body portion 317 and is located on the bottom wall surface 3131 of the recessed portion 313. The second ridge 320 extends to the second mounting portion 3182. In embodiments shown in FIG. 16 and FIG. 17, the first ridge 319 may extend from the side wall surface 3132 of the recessed portion 313 to the front end surface of the first mounting portion 3181 in the pressing direction of the button 31. The second ridge 320 may extend from the side wall surface 3132 of the recessed portion 313 to the front end surface of the second mounting portion 3182 in the pressing direction of the button 31. In some other embodiments, the extending direction of the first ridge 319 and the second ridge 320 may also be at an angle to the pressing direction of the button 31.

In this way, the first ridge 319 and the second ridge 320 may ensure the strength of the button 31 as measured at the first mounting portion 3181 and the second mounting portion 3182, and then ensure the overall strength of the button 31, thereby ensuring reliability of the button assembly 30. In addition, a distance between the button 31 and the blocking portion 2111e as measured at the first mounting portion 3181 and the second mounting portion 3182 may be further increased, which may prevent an increase in the assembly difficulty due to the button assembly 30 swaying during assembly of the button assembly 30 to the first border frame 2111.

In some examples, the first ridge 319, the second ridge 320, the button body portion 317, the first mounting portion 3181, and the second mounting portion 3182 may be formed as an integral structure. In some other examples, the first ridge 319 and the second ridge 320 may also be respectively fixed to the button body portion 317 through an adhesive, a snap fit, or the like. This is not limited in this application.

Referring to FIG. 17 and FIG. 18, FIG. 18 is a partial schematic structural cross-sectional view of a first border frame 2111 of the electronic device 100 shown in FIG. 17. The blocking portion 2111e is provided with a second through hole 2111g and a third through hole 2111h. The second through hole 2111g and the third through hole 2111h are both in communication with the first mounting groove 2111d and the first surface 2111a. In the height direction of the first border frame 2111, the first ridge 319 is arranged opposite to the second through hole 2111g, and the second ridge 320 is arranged opposite to the third through hole 2111h. In this way, the blocking portion 2111e is partially provided with a through hole, so as to avoid the first ridge 319, the second ridge 320, and the bent portion 102 of the screen 10, which is conducive to realizing lightness and thinness of the electronic device 100.

Based on this, still referring to FIG. 17 and FIG. 18, a support apparatus 20 further includes a second protective film 25 and a third protective film 26. The second protective film 25 is arranged at the second through hole 2111g and covers the second through hole 2111g. The third protective film 26 is arranged at the third through hole 2111h and covers the third through hole 2111h. Specifically, the second protective film 25 and the third protective film 26 may be bonded to the surface of the blocking portion 2111e facing the screen 10. The second protective film 25 and the third protective film 26 may be polyimide (Polyimide, PI) films, or may be polyethylene glycol terephthalate (polyethylene glycol terephthalate, PET) films. In this way, damage to the screen 10 as a result of dirt entering from the first opening 2111d1 of the first mounting groove 2111d corroding the bent portion 102 through the second through hole 2111g and the third through hole 2111h may be prevented.

Based on the foregoing embodiments, in the height direction of the first border frame 2111, a thickness of the button portion between the recessed portion 313 and the fourth surface 312 is greater than or equal to 0.4 mm. In some examples, the button 31 is a metal member. The thickness of the button portion between the recessed portion 313 and the fourth surface 312 may be 0.4 mm, 0.6 mm, 0.8 mm, or 1.0 mm. In some other examples, the button 31 is a plastic member. The thickness of the button portion between the recessed portion 313 and the fourth surface 312 may be 0.6 mm, 0.8 mm, or 1.0 mm. In this way, the overall strength of the button 31 may be ensured in a case that the sufficient space is provided between the button 31 and the bent portion 102 of the screen 10, thereby ensuring the reliability of the button assembly 30.

Based on the foregoing embodiments, in the height direction of the first border frame 2111, a thickness of the button portion between the third surface 311 and the fourth surface 312 is greater than or equal to 1.2 mm. For example, the thickness of the button portion between the third surface 311 and the fourth surface 312 may be 1.2 mm, 1.3 mm, or 1.4 mm. In this way, it may be ensured that an end surface of the button 31 facing a fingerprint recognition module 32 has a sufficient large area to reinforce a chip of the fingerprint recognition module 32 and provide a sufficient support force for a first flexible circuit board 33, to prevent the chip of the fingerprint recognition module 32 from being damaged due to insufficient reinforcement of the button 31 on the fingerprint recognition module 32.

In the descriptions of this specification, the specific features, structures, materials, or characteristics may be combined in a proper manner in any one or more of embodiments or examples.

Finally, it should be noted that the above embodiments are only used to describe the technical solutions of this application, but not intended to limit this application. Although this application has been described in detail with reference to the foregoing embodiments, it should be understood by a person skilled in the art that the technical solutions described in the foregoing embodiments can still be modified, or some or all of technical features can be replaced by equivalents. However, these modifications or substitutions do not cause the essence of corresponding technical solutions to depart from the spirit and scope of the technical solutions in embodiments of this application.

## Claims

1. An electronic device, comprising:
a first border frame, wherein the first border frame comprises a first surface and a second surface opposite to each other and an outer side surface connected between the first surface and the second surface, and the outer side surface is provided with a first mounting groove;
a screen, wherein the screen is located on a side of the first surface away from the second surface, the screen comprises a body portion and a bent portion, and the bent portion is bent from an edge of the body portion to a back side of the body portion; and
a button, wherein the button is mounted to the first mounting groove and is movable in a pressing direction relative to the first border frame, the button comprises a third surface, a fourth surface, and a recessed portion, the third surface faces the screen, the fourth surface faces away from the screen, the recessed portion is arranged on the third surface and is recessed from the third surface toward the fourth surface, and the recessed portion and the bent portion are arranged opposite to each other in a height direction of the first border frame.

2. The electronic device according to claim 1, wherein
the first border frame comprises a blocking portion, and the blocking portion is located between the recessed portion and the bent portion.

3. The electronic device according to claim 2, wherein
a thickness of the blocking portion is greater than or equal to 0.3 mm.

4. The electronic device according to claim 2 or 3, wherein
in the pressing direction, the recessed portion extends through a front end surface of the button.

5. The electronic device according to claim 4, wherein
the button further comprises a fifth surface and a sixth surface arranged opposite to each other in a length direction of the first border frame, and the recessed portion extends through the fifth surface and the sixth surface.

6. The electronic device according to claim 5, wherein
a bottom wall surface of the recessed portion is a plane.

7. The electronic device according to any one of claims 2 to 5, wherein
in the length direction of the first border frame, a bottom wall surface of the recessed portion comprises a first region, a second region, and a third region successively connected, a distance between the second region and the fourth surface is greater than a distance between the first region and the fourth surface, and the distance between the second region and the fourth surface is further greater than a distance between the third region and the fourth surface.

8. The electronic device according to claim 7, further comprising:
an elastic member, wherein the elastic member is arranged on a front end surface of a button portion between the second region and the fourth surface in the pressing direction; and
a first circuit board, wherein the first circuit board is located on a front side of the button in the pressing direction, the first circuit board is fixed relative to the first border frame, a surface of the first circuit board facing the button is provided with a switch member, and the elastic member is located between the button and the switch member and is in contact with the switch member.

9. The electronic device according to claim 7 or 8, wherein
the blocking portion is provided with a first through hole, the first through hole is in communication with the first mounting groove and the first surface, and the second region and the first through hole are arranged opposite to each other in the height direction of the first border frame.

10. The electronic device according to claim 9, further comprising:
a first protective film, wherein the first protective film is arranged at the first through hole and covers the first through hole.

11. The electronic device according to any one of claims 2 to 10, wherein the button comprises:
a button body portion; and
two mounting portions, wherein the two mounting portions are arranged on a front end surface of the button body portion in the pressing direction, the two mounting portions are mounted to the first border frame, the two mounting portions are spaced apart in the length direction of the first border frame, a part of a surface of the button body portion forms a part of the bottom wall surface of the recessed portion, and a surface of each of the mounting portions facing the bent portion forms another part of the bottom wall surface of the recessed portion.

12. The electronic device according to claim 11, wherein
the button body portion comprises a first portion, a second portion, and a third portion successively connected in the length direction of the first border frame;
the two mounting portions comprise a first mounting portion and a second mounting portion, the first mounting portion is arranged on the first portion, and the second mounting portion is arranged on the third portion; and
the button further comprises a first ridge and a second ridge, the first ridge is arranged on the first portion and arranged on the bottom wall surface of the recessed portion, the first ridge extends to the first mounting portion, the second ridge is arranged on the third portion and arranged on the bottom wall surface of the recessed portion, and the second ridge extends to the second mounting portion.

13. The electronic device according to claim 12, wherein
the blocking portion is provided with a second through hole and a third through hole, and the second through hole and the third through hole are both in communication with the first mounting groove and the first surface; and
in the height direction of the first border frame, the first ridge is arranged opposite to the second through hole, and the second ridge is arranged opposite to the third through hole.

14. The electronic device according to claim 13, further comprising:
a second protective film, wherein the second protective film is arranged at the second through hole and covers the second through hole; and
a third protective film, wherein the third protective film is arranged at the third through hole and covers the third through hole.

15. The electronic device according to any one of claims 1 to 14, wherein
in the height direction of the first border frame, a thickness of a button portion between the recessed portion and the fourth surface is greater than or equal to 0.4 mm.

16. The electronic device according to any one of claims 1 to 15, wherein
in the height direction of the first border frame, a thickness of a button portion between the third surface and the fourth surface is greater than or equal to 1.2 mm.

17. The electronic device according to any one of claims 1 to 16, further comprising:
a fingerprint recognition module, wherein the fingerprint recognition module is arranged on a rear side of the button in the pressing direction; and
a first flexible circuit board, wherein a part of the first flexible circuit board is arranged between the button and the fingerprint recognition module, and is electrically connected to the fingerprint recognition module.

18. The electronic device according to any one of claims 1 to 17, wherein the screen comprises:
a display panel, wherein the display panel is a flexible display panel and comprises a display portion and a non-display portion, the display portion forms a part of the body portion, a part of the non-display portion forms the bent portion, an other part of the non-display portion forms a fixing portion, the fixing portion is fixed to the back side of the body portion, and the bent portion is connected between the fixing portion and the display portion; and
a first chip, wherein the first chip is arranged on a side of the fixing portion facing away from the body portion.
